(19) Europäisches Patentamt / European Patent Office / Office européen des brevets

(11) **EP 3 090 986 B1**

## (12) FASCICULE DE BREVET EUROPEEN

(45) Date de publication et mention de la délivrance du brevet:
**15.11.2023 Bulletin 2023/46**

(21) Numéro de dépôt: **16167600.2**

(22) Date de dépôt: **29.04.2016**

(51) Classification Internationale des Brevets (IPC):
**C01F 7/02** *(2022.01)*       **C01F 7/447** *(2022.01)*
**B01J 32/00** *(2006.01)*       **B01J 23/40** *(2006.01)*
**B01J 21/04** *(2006.01)*       **B01J 35/10** *(2006.01)*
**C01B 3/40** *(2006.01)*        **B01J 27/135** *(2006.01)*
**B01J 35/00** *(2006.01)*       **B01J 37/00** *(2006.01)*
**C01B 3/42** *(2006.01)*        **B01J 35/02** *(2006.01)*
**B01J 35/08** *(2006.01)*

(52) Classification Coopérative des Brevets (CPC):
**B01J 21/04; B01J 23/40; B01J 35/023;
B01J 35/08; B01J 37/0072; C01B 3/40; C01B 3/42;
C01F 7/02; C01F 7/447;** B01J 27/135; B01J 35/002;
B01J 35/1019; B01J 35/1042; B01J 35/1061;
B01J 35/108;                                    (Cont.)

(54) **PROCÉDÉS DE PRÉPARATION DES PARTICULES SPHÉROÏDALES D'ALUMINE DE RÉSISTANCE MÉCANIQUE AMÉLIORÉE**

VERFAHREN ZUR HERSTELLUNG VON KUGELFÖRMIGEN ALUMINIUMOXID-PARTIKELN MIT VERBESSERTEM MECHANISCHEM WIDERSTAND

PROCESSES FOR PREPARING SPHEROIDAL ALUMINA PARTICLES WITH IMPROVED MECHANICAL STRENGTH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2015 FR 1554097**

(43) Date de publication de la demande:
**09.11.2016 Bulletin 2016/45**

(73) Titulaire: **IFP Energies nouvelles
92500 Rueil-Malmaison (FR)**

(72) Inventeurs:
• **BAZER-BACHI, Delphine
30340 SAINT PRIVAT DES VIEUX (FR)**
• **DALMAZZONE, Christine
78220 VIROFLAY (FR)**
• **DANDEU, Aurelie
38540 SAINT-JUST CHALEYSSIN (FR)**
• **DIEHL, Fabrice
69003 LYON (FR)**
• **LE CORRE, Vincent
38540 SAINT-JUST-CHALEYSSIN (FR)**
• **LOPEZ, Joseph
30340 SAINT JULIEN LES ROSIERS (FR)**
• **TALEB, Anne-Lise
69440 ST MAURICE SUR DARGOIRE (FR)**

(74) Mandataire: **IFP Energies nouvelles
Département Propriété Industrielle
Rond Point de l'échangeur de Solaize
BP3
69360 Solaize (FR)**

(56) Documents cités:
**CN-B- 102 765 737     FR-A1- 2 527 197
FR-A1- 2 984 180**

• **AMINUL ISLAM ET AL: "Synthesis and characterization of millimetric gamma alumina spherical particles by oil drop granulation method", JOURNAL OF POROUS MATERIALS, KLUWER ACADEMIC PUBLISHERS, BO, vol. 19, no. 5, 6 décembre 2011 (2011-12-06), pages 807-817, XP035114612, ISSN: 1573-4854, DOI: 10.1007/S10934-011-9535-0**

<u>Remarques:</u>
Le dossier contient des informations techniques présentées postérieurement au dépôt de la demande et ne figurant pas dans le présent fascicule.

(52) Classification Coopérative des Brevets (CPC):
(Cont.)
B01J 37/0018; C01B 2203/0227; C01B 2203/107;
C01B 2203/1082; C01B 2203/1247;
C01B 2203/148; C01P 2004/32; C01P 2004/51;
C01P 2004/60; C01P 2006/11; C01P 2006/12;
C01P 2006/14; C01P 2006/16; C01P 2006/17;
Y02P 20/52

<u>Remarques:</u>

**Description**

L'invention se rapporte aux procédés de préparation des particules sphéroïdales d'alumine utilisables comme support de catalyseurs.

**État de la technique**

La présente invention concerne des procédés de préparation des particules sphéroïdales d'alumine par le procédé dit d'"'égouttage dans l'huile", aussi appelé oil-drop selon la terminologie anglo-saxonne et destinées à une application en reformage catalytique.

Les particules sphéroïdales d'alumine utilisées comme support poreux de catalyseur sont bien connues de l'Homme du métier.

Par exemple le document US 2 422 499 décrit un procédé de fabrication de telles particules en faisant appel au procédé dit oil-drop.

Le principe de cette technique consiste à préparer un sol aqueux d'alumine (boehmite) et à égoutter, en fines gouttelettes, le sol d'alumine à travers une buse, dans une colonne comprenant une phase supérieure non-miscible à l'eau et une phase aqueuse inférieure. La mise en forme des particules a alors lieu lors du passage dans la phase non-miscible à l'eau et la coagulation ultérieure dans la phase aqueuse. Une fois recueillies, les particules sont lavées, séchées et calcinées. On obtient ainsi des particules sphéroïdales d'alumine.

Parmi les paramètres à maîtriser au cours de la synthèse de telles particules sphéroïdales, la densité, le volume poreux et la distribution poreuse sont particulièrement importants car ils affectent l'utilisation finale de ces particules. Il est également important, notamment dans une application catalytique mise en oeuvre dans un lit mobile, que la taille des particules soit aussi homogène que possible afin d'assurer un écoulement fluide du catalyseur.

Ces particules présentent le plus souvent une texture mésoporeuse et macroporeuse. La mésoporosité résulte de l'organisation des plaquettes de boehmite tandis que la macroporosité est générée par voie sacrificielle à l'aide d'agent porogène. La présence de mésopores dans ces supports est essentielle pour le bon déroulement des réactions catalytiques. Quant aux macropores, il est connu du document FR 1 503 495 que pour abaisser la densité des particules, il est possible d'ajouter des agents porogènes dans le sol d'alumine. Lors de la formation des particules, ces agents porogènes, qui sont ensuite éliminés lors de l'étape de calcination, créent une macroporosité dans la particule. Cette macroporosité a pour effet d'augmenter le volume poreux et donc de diminuer la densité de la particule.

Cependant, si cette macroporosité n'est pas contrôlée, elle peut avoir un impact négatif sur la résistance mécanique des supports, et notamment sur la résistance mécanique des supports de faible densité.

La résistance mécanique (en particulier la résistance à l'écrasement et à l'attrition) est un paramètre primordial à prendre en compte pour l'application envisagée de la particule d'alumine en catalyse. En effet, au cours de leur mise en oeuvre, par exemple en lit mobile, les particules d'alumine sont soumises à des chocs et des phénomènes de frottement qui peuvent provoquer la formation de fines et/ou de brisures qui risquent de boucher les installations ou les filtres et qui, en outre, contribuent à la perte d'une partie du catalyseur chargé dans le réacteur catalytique.

Le document CN10231134 décrit des particules sphéroïdales d'alumine macroporeuse préparées par un procédé de préparation différent du procédé oil-drop et dans lequel on prépare une émulsion W/O (Water/Oil selon la terminologie anglo-saxonne, soit une émulsion de type phase aqueuse dans une phase huileuse) d'une phase huileuse et d'une phase aqueuse comprenant un sol d'alumine, des microsphères de polymère comme agent porogène et un coagulant. L'émulsion est ensuite agitée puis chauffée afin d'effectuer la gélification du sol d'alumine dans la phase huileuse, en particules. Les particules ainsi formées sont ensuite séparées, maturées, séchées et calcinées.

La taille des macropores des particules d'alumine est uniforme et contrôlable dans une plage de moins de 1 $\mu$m, les particules sphériques ont une taille contrôlable et une résistance mécanique élevée. Plus particulièrement, les particules sphéroïdales d'alumine décrites ont une surface spécifique comprise entre 100 et 350 m$^2$/g, un volume poreux total compris entre 0,5 et 1,5 mL/g, un diamètre médian des macropores compris entre 0,05 et 1 $\mu$m (50 et 1000 nm), un diamètre de particules compris entre 0,1 et 5 mm et une résistance mécanique comprise entre 70 et 150 N. Il est décrit que ces particules peuvent être utilisées comme support de catalyseur, adsorbant, garnissage chromatographique, électrode ou matériau de résistance acoustique ou thermique. Cependant, ce document ne visant pas une utilisation particulière des particules comme support d'un catalyseur de reformage catalytique, ce document ne décrit ni l'importance de l'homogénéité des tailles de particules, ni l'importance de la limitation du taux de macroporosité au sein d'une particule.

Le document WO2013/093221 divulgue des particules sphéroïdales d'alumine préparées par la technique oil-drop pour une application de support de catalyseur présentant une texture mésoporeuse et macroporeuse et dans lesquelles le volume macroporeux est faible par rapport au volume mésoporeux afin d'augmenter la résistance mécanique. Plus particulièrement, les particules sphéroïdales d'alumine comprennent un volume accessible déterminé à partir des isothermes d'adsorption d'azote, appelé V$_{méso}$, représentatif du volume mésoporeux, qui est compris entre 0,65 et 0,85 mL/g et un volume des pores de diamètre inférieur à 7 $\mu$m, appelé V$_{méso+macro}$, mesuré par porosimétrie au mercure, qui est compris entre 0,65 et 0,85 mL/g, lesdites particules comprenant un diamètre moyen compris entre 1,2 et 3 mm, une surface spécifique B.E.T comprise entre 150 et 300 m$^2$/g et une valeur de densité de remplissage tassée (DRT) comprise entre 0,5 et 0,6 g/ml. Les particules sphéroïdales d'alumine ont généralement une valeur moyenne d'écrasement grain par grain (EGG) d'au moins 2,5 daN (25 N). Cependant la dispersion en taille de la macroporosité n'est pas contrôlée.

## Résumé de l'invention

L'objet de l'invention est de proposer des particules sphéroïdales d'alumine de taille homogène ayant une texture méso- et macroporeuse dans laquelle la macroporosité présente une faible dispersion en taille et dans laquelle le volume poreux est majoritairement mésoporeux. Ces particules présentent une résistance mécanique améliorée.

En effet, le contrôle de la macroporosité, notamment le contrôle du taux de macroporosité au sein d'une particule et le contrôle de la dispersion en taille de la macroporosité sont importants pour fabriquer des particules d'alumine qui présentent deux caractéristiques antagonistes, à savoir la densité souhaitée, notamment une densité faible, et une bonne résistance mécanique.

Plus particulièrement, l'invention concerne des procédés de préparation des particules sphéroïdales d'alumine caractérisées par une surface spécifique B.E.T comprise entre 150 et 300 m$^2$/g, un diamètre moyen de particule compris entre 1,2 et 3 mm et une dispersion des diamètres des particules exprimée par un écart type n'excédant pas 0,1, un volume poreux total mesuré par porosimétrie au mercure compris entre 0,50 et 0,85 mL/g, un taux de macroporosité au sein d'une particule inférieur à 30% et dans lesquelles la dispersion des diamètres des macropores exprimée par le ratio des diamètres D90/D50 n'excède pas 8.

Selon une variante, la valeur de densité de remplissage tassée (DRT) est comprise entre 0,4 et 0,8 g/mL.

Selon une variante, la valeur moyenne d'écrasement grain par grain (EGG) est d'au moins 25 N.

Selon une variante, le volume poreux total mesuré par porosimétrie au mercure est compris entre 0,60 et 0,85 mL/g.

Selon une variante, la dispersion des diamètres des macropores exprimée par le ratio des diamètres D90/D50 n'excède pas 6.

La distribution poreuse particulière observée dans les particules sphéroïdales d'alumine est notamment due à leurs procédés de préparation utilisant soit un agent porogène solide, soit un agent porogène liquide.

Ainsi, selon une première variante, l'invention concerne un procédé de préparation des particules sphéroïdales d'alumine selon la revendication 1 comprenant les étapes suivantes :

a) on prépare une suspension comprenant de l'eau, un acide et au moins une poudre de boehmite,

b) on ajoute un agent porogène solide ayant une taille de particules comprise entre 0,05 et 30 μm à la suspension obtenue à l'étape a),

c) on mélange la suspension obtenue à l'étape b), jusqu'à ce que la viscosité dudit mélange soit comprise entre 200 et 700 mPa.s, la viscosité étant la viscosité dynamique mesurée à température ambiante sous un cisaillement de 100 s$^{-1}$,

d) on met en forme les particules sphéroïdales par coagulation en goutte à partir du mélange obtenu à l'étape c),

e) on sèche les particules obtenues à l'étape d),

f) on calcine les particules obtenues à l'étape e).

Selon cette variante, l'agent porogène solide est de préférence choisi parmi les amidons, les fécules, les particules de latex, de polystyrène, ou d'acrylique, les polysaccharides, les particules de noir de carbone et les sciures de bois.

Selon cette variante, la proportion d'agent porogène solide, exprimée comme étant le rapport de la masse d'agent porogène sur la masse totale d'oxydes est de préférence comprise entre 0,2 et 50% en poids.

Selon une deuxième variante, l'invention concerne un procédé de préparation des particules sphéroïdales d'alumine selon la revendication 4 comprenant les étapes suivantes :

a) on prépare une suspension comprenant de l'eau, un acide et au moins une poudre de boehmite,

b') on ajoute au moins un agent porogène liquide, au moins un tensioactif et éventuellement de l'eau, ou une émulsion comprenant au moins un agent porogène liquide, au moins un tensioactif et de l'eau à la suspension de l'étape a),

b") on disperse la suspension obtenue à l'étape b') à l'aide d'un disperseur fonctionnant à un taux de cisaillement compris entre 1000 et 200000 s$^{-1}$,

c) on mélange la suspension dispersée de l'étape b") jusqu'à ce que la viscosité dudit mélange soit comprise entre 200 et 700 mPa.s, la viscosité étant la viscosité dynamique mesurée à température ambiante sous un cisaillement de 100 s$^{-1}$,

d) on met en forme les particules sphéroïdales par coagulation en goutte à partir du mélange obtenu à l'étape c),

e) on sèche les particules obtenues à l'étape d),

f) on calcine les particules obtenues à l'étape e).

Selon cette variante, l'agent porogène liquide est de préférence choisi parmi les graisses, les huiles et cires minérales, les corps gras, les hydrocarbures et les coupes pétrolières et le tensio-actif est choisi parmi un tensio-actif non-ionique ou ionique.

Selon cette variante, la proportion de la masse d'agent porogène liquide sur la masse totale d'oxydes est comprise entre 0,2 et 50 % en poids et la proportion de tensioactif, définie comme étant égale au rapport de la masse de tensioactif sur la masse de l'agent porogène, est de préférence comprise entre 1 et 25% en poids.

Selon cette variante, à la suspension de l'étape b'), on peut ajouter en outre au moins un agent porogène solide ayant une taille de particules comprise entre 0,05 et 30 $\mu$m.

Selon les deux variantes, la suspension de l'étape a) peut comprendre en outre une charge d'alumine ou de précurseur d'alumine constituée de particules ayant un diamètre médian en volume inférieur ou égal à 50 $\mu$m.

La divulgation se rapporte également à un catalyseur comprenant un support formé de particules selon l'invention ou préparées selon leur procédé de préparation et un ou plusieurs métaux nobles choisis dans le groupe VIIIB du tableau périodique.

Selon une variante, le catalyseur peut comprendre en outre un ou plusieurs éléments choisis dans les groupes IA, IIA, IIIA, IVA, VA, et le groupe constitué par le fluor, le chlore, le brome et l'iode.

La divulgation se rapporte également à une utilisation du catalyseur selon l'invention pour réaliser une réaction de reformage catalytique.

**Description détaillée**

Particules sphéroïdales d'alumine

L'invention concerne des procédés de préparation des particules sphéroïdales d'alumine caractérisées par une surface spécifique B.E.T comprise entre 150 et 300 m$^2$/g, un diamètre moyen de particule compris entre 1,2 et 3 mm et une dispersion des diamètres des particules exprimée par un écart type n'excédant pas 0,1, un volume poreux total mesuré par porosimétrie au mercure compris entre 0,50 et 0,85 mL/g, un taux de macroporosité au sein d'une particule inférieur à 30% et dans lesquelles la dispersion des diamètres des macropores exprimée par le ratio des diamètres D90/D50 n'excède pas 8.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm. Dans la suite, les groupes d'éléments chimiques sont donnés selon la classification CAS (CRC Handbook of Chemistry and Physics, éditeur CRC press, rédacteur en chef D.R. Lide, 81 ème édition, 2000-2001 ). Par exemple, le groupe VIII selon la classification CAS correspond aux métaux des colonnes 8, 9 et 10 selon la nouvelle classification IUPAC.

Les particules sphéroïdales d'alumine obtenues par les procédés selon l'invention présentent une surface spécifique B.E.T. comprise entre 150 et 300 m$^2$/g, de préférence comprise entre 150 et 220 m$^2$/g. On entend par surface spécifique B.E.T., la surface spécifique déterminée par adsorption d'azote conformément à la norme ASTM D 3663-78 établie à partir de la méthode BRUNAUER-EMMETT-TELLER décrite dans le périodique « The Journal of American Society », 60, 309, (1938).

Les particules sphéroïdales d'alumine obtenues par les procédés selon l'invention présentent un diamètre moyen de particule compris entre 1,2 et 3 mm, de préférence compris entre 1,4 et 2 mm et de façon encore préférée entre 1,5 et 1,9 mm.

Les particules sphéroïdales d'alumine obtenues par les procédés selon l'invention présentent un volume poreux total mesuré par porosimétrie au mercure compris entre 0,50 et 0,85 mL/g, de préférence compris entre 0,60 et 0,85 mL/g.

Le volume poreux total est mesuré par porosimétrie par intrusion de mercure selon la norme ASTM D4284-12 à une pression maximale de 4000 bar (400 MPa), utilisant une tension de surface de 484 dyne/cm et un angle de contact de 140°. On fixe à 0,2 MPa la valeur à partir de laquelle le mercure remplit tous les vides intergranulaires, et on considère qu'au-delà le mercure pénètre dans les pores de l'échantillon. On entend par volume poreux total la somme du volume des mésopores et du volume des macropores d'un diamètre jusqu'à 10 $\mu$m mesurée par porosimétrie par intrusion de mercure.

Le taux de macroporosité au sein d'une particule est déterminé à partir du traitement d'images de microscopie électronique à balayage en considérant l'ensemble des pores de diamètre compris entre 0,05 $\mu$m et 30 $\mu$m. La microscopie à balayage est utilisée afin de quantifier le nombre et la taille des macropores, par exemple sur un microscope ZEISS Supra40®. Ces échantillons sont observés sur section polie en électrons rétrodiffusés (contraste chimique). L'analyse d'images, pour déterminer la distribution des tailles des macropores, a été réalisée en utilisant un logiciel de traitement d'images à partir de 5 clichés sur 5 billes différentes et à une résolution de 2048*1536 pixels. La méthode de quantification permet de déterminer le nombre et la taille de macropores compris entre 0,2 et 30 $\mu$m à partir de clichés pris à grandissement X500. Cette méthode de détermination des macropores est généralement complétée ou substituée par la méthode dite de "quantification de petits macropores" permettant de déterminer le nombre et la taille de macropores compris entre 0,05 et 0,5 $\mu$m à partir de clichés pris à un grandissement X2500. La surface totale des macropores est ramenée à la surface de l'image pour obtenir le taux de macroporosité, noté $p_{macro}$. Ce taux de macroporosité apparent sur l'image est considéré identique au taux volumique de macroporosité de la particule. L'Homme du métier saura analyser suffisamment de clichés afin d'obtenir un taux de macroporosité représentatif de l'ensemble de la particule.

Les particules sphéroïdales d'alumine obtenues par les procédés selon l'invention présentent avantageusement un taux de macroporosité au sein d'une particule inférieur à 30 % du volume poreux total, de préférence inférieur à 25 %, et de manière particulièrement préférée inférieur à 20 %.

Les particules sphéroïdales d'alumine obtenues par les procédés selon l'invention présentent un diamètre médian macroporeux vu par microscopie électronique à balayage compris entre 0,05 $\mu$m (50 nm) et 30 $\mu$m (30000 nm). Selon une première variante, notamment lorsqu'on utilise un agent porogène solide pour la préparation des particules sphéroïdales d'alumine, le diamètre médian macroporeux est compris entre 0,05 $\mu$m (50 nm) et 30 $\mu$m (30000 nm), de préférence compris entre 1 $\mu$m (1000 nm) et 5 $\mu$m (5000 nm).

Selon une deuxième variante, notamment lorsqu'on utilise un agent porogène liquide pour la préparation des particules sphéroïdales d'alumine, le diamètre médian macroporeux est de préférence compris entre 0,05 $\mu$m (50 nm) et 2 $\mu$m (2000 nm).

Le diamètre médian macroporeux, aussi appelé D50, est défini comme étant le diamètre tel que, parmi l'ensemble des pores constituant le volume macroporeux, tous les pores de taille inférieure à ce diamètre constituent 50% du nombre de macropores. Ce diamètre est déterminé par traitement des clichés de microscopie électronique à balayage (MEB) obtenus après observation des sections polies en mode électrons rétro diffusés.

Le diamètre D90 est défini comme étant le diamètre tel que, parmi l'ensemble des pores constituant le volume macroporeux, tous les pores de taille inférieure à ce diamètre constituent 90% du nombre de macropores déterminé par ce même traitement. Ce diamètre est déterminé par traitement des clichés de microscopie électronique à balayage (MEB) obtenus après observation des sections polies en mode électrons rétro diffusés.

Selon une caractéristique essentielle de l'invention, la dispersion des diamètres des macropores desdites particules sphéroïdales d'alumines exprimée par le ratio D90/D50 n'excède pas 8, de façon préférée n'excède pas 6, et de manière encore plus préférée n'excède pas 4. Sans vouloir être lié à aucune théorie, c'est en effet cette distribution des macropores qui procure aux particules sphéroïdales d'alumine une résistance mécanique améliorée, ce qui est important notamment lorsqu'elles sont utilisées en tant que support dans une réaction catalytique.

Avantageusement, les particules sphéroïdales d'alumine présentent une valeur de densité de remplissage tassée (DRT) comprise entre 0,4 et 0,8 g/mL, de préférence compris entre 0,5 et 0,7 g/mL, et de manière particulièrement préférée comprise entre 0,5 et 0,6 g/ml. La mesure de DRT consiste à introduire les particules sphéroïdales dans une éprouvette dont on a préalablement déterminé le volume puis, par vibration, à les tasser jusqu'à obtenir un volume constant. La masse volumique apparente du produit tassé est calculée en comparant la masse introduite et le volume occupé après tassement. L'incertitude sur la mesure est généralement de l'ordre de $\pm$ 0,01 g/mL.

Ainsi, les particules sphéroïdales d'alumine obtenues par les procédés selon l'invention lorsqu'elles sont utilisées en tant que support de catalyseur permettent de remplir les exigences d'un support d'alumine dit dense (e.g. densité de remplissage tassée autour de 0,6 à 0,7 g/mL) ainsi que les exigences d'un support d'alumine dit léger (e.g. densité de remplissage tassée autour de 0,5 à 0,6 g/mL).

De préférence, la valeur de densité de remplissage tassée (DRT) desdites particules est comprise entre 0,5 et 0,6 g/mL.

Un but de l'invention est de proposer des particules sphéroïdales d'alumine ayant une résistance mécanique satisfaisante pour être utilisées dans les réacteurs catalytiques. Les particules sphéroïdales d'alumine obtenues par les procédés selon l'invention présentent avantageusement une valeur moyenne d'écrasement grain par grain (EGG), d'au moins 25 N, de préférence d'au moins 30 N.

La valeur de l'EGG est obtenue via un test normalisé (norme ASTM D4179-01) qui consiste à soumettre un objet millimétrique, comme une bille dans le cas de la présente invention, à une force de compression générant la rupture. Ce test est utilisé pour mesurer de manière indirecte la résistance du matériau.

L'analyse est répétée sur un certain nombre de particules pris individuellement et typiquement sur un nombre de particules compris entre 50 et 200, de préférence compris entre 100 et 200. La moyenne des forces latérales de rupture à l'écrasement mesurées constitue l'EGG moyen qui est exprimé dans le cas des particules sphéroïdales en unité de force (N).

Procédé de préparation des particules sphéroïdales d'alumine

La distribution poreuse particulière observée dans les particules sphéroïdales d'alumine est notamment due à leurs procédés de préparation utilisant soit un agent porogène solide, soit un agent porogène liquide.

Variante avec agent porogène solide

Ainsi, selon une première variante, l'invention concerne un procédé de préparation des particules sphéroïdales d'alumine selon la revendication 1 comprenant les étapes suivantes :

a) on prépare une suspension comprenant de l'eau, un acide et au moins une poudre de boehmite,
b) on ajoute un agent porogène solide ayant une taille de particules comprise entre 0,05 et 30 $\mu$m à la suspension obtenue à l'étape a),
c) on mélange la suspension obtenue à l'étape b), jusqu'à ce que la viscosité dudit mélange soit comprise entre 200 et 700 mPa.s, la viscosité étant la viscosité dynamique mesurée à température ambiante sous un cisaillement de 100 s$^{-1}$,
d) on met en forme les particules sphéroïdales par coagulation en goutte à partir du mélange obtenu à l'étape c),
e) on sèche les particules obtenues à l'étape d),
f) on calcine les particules obtenues à l'étape e).

Selon l'étape a) du procédé de préparation, on prépare une suspension comprenant de l'eau, un acide et au moins une poudre de boehmite.

On entend par poudre de boehmite un oxyhydroxyde d'aluminium de formule AlO(OH) sous forme de poudre, aussi appelé gel d'alumine. La boehmite existe sous différents types. Le précurseur d'alumine utilisé répond à la formule générale $Al_2O_3, nH_2O$. On peut en particulier utiliser des hydrates d'alumine tels que l'hydrargilite, la gibbsite, la bayerite, la boehmite ou la pseudo boehmite et les gels d'alumine amorphe ou essentiellement amorphes. Un mélange de ces produits sous quelque combinaison que ce soit peut être également utilisé.

En fonction du type de poudre de boehmite et de son volume poreux intrinsèque, le taux de porogène est ajusté pour atteindre le volume poreux total visé dans l'application.

Pour une boehmite donnée, des quantités d'agent porogène croissantes vont induire des volumes poreux accrus et des résistances mécaniques plus faibles. La présente invention propose pour un système boehmite / taux de porogène donné, un optimum dans la distribution macroporeuse, exprimée par un ratio D90/D50, conduisant ainsi à une valeur moyenne d'écrasement grain par grain (EGG), et donc à une résistance mécanique, améliorées.

La préparation de la suspension de l'étape a) est réalisée par mélange sous agitation vigoureuse d'une solution aqueuse acide dans laquelle on a ajouté un ou plusieurs types de poudre de boehmite.

Lors de la préparation de la suspension de boehmite, il est possible d'ajouter une charge d'alumine. La quantité de charge mise en oeuvre, exprimée en % en poids d'$Al_2O_3$, est inférieure ou égale à 30% en poids par rapport au poids total d'équivalent $Al_2O_3$ de la suspension. Cette charge peut être choisie dans le groupe formé par les alumines dites de transition comportant au moins une phase rhô, chi, êta, gamma, kappa, thêta, delta et alpha. La charge d'alumine peut être sous forme de poudre ou de particules d'alumine obtenues par broyage et tamisage de corps d'alumine façonnés ; ces particules ont, après broyage, un diamètre médian inférieur ou égal à 50 $\mu$m, de préférence inférieur à 30 $\mu$m et de manière encore plus préférée inférieur à 20 $\mu$m. Le terme "diamètre médian" désigne ici le diamètre d'une sphère équivalente tel que 50 % des particules, en volume, ont un diamètre supérieur et 50 % un diamètre inférieur.

Le taux d'acide engagé dans la suspension est tel que le rapport de la masse dudit acide rapporté à la masse sèche de la ou des sources de boehmite et de la charge (si celle-ci est présente dans la suspension), soit compris entre 0,5 et 20 % poids, de préférence entre 1 et 15%. A titre d'exemple, la solution aqueuse acide est une solution d'un acide minéral fort, tel que $HNO_3$ ou $H_2SO_4$.

La proportion d'eau engagée dans la suspension, est calculée de telle sorte que le rapport de la masse sèche (correspondant à la masse de poudre de boehmite plus éventuellement la charge, exprimée en équivalent $Al_2O_3$) sur la masse d'eau totale du mélange soit compris entre 10 et 50% poids, de préférence entre 15 et 40%.

Éventuellement, la suspension peut comprendre un sel d'un ou plusieurs éléments choisis parmi les groupes IA, IIA, IIIA, IVA, VA, qui agissent comme promoteurs dans les catalyseurs décrits ci-dessous. Ces éléments seront ainsi incorporés dans les particules sphéroïdales finales après séchage et calcination. La proportion du ou des sels métalliques est calculée pour que la teneur massique en éléments des groupes IA, IIA, IIIA, IVA, VA dans le produit final, après calcination, soit comprise entre 0,01 et 2% poids, de manière préférée entre 0,05 et 1% poids.

Selon l'étape b) du procédé de préparation, on ajoute un agent porogène solide ayant une taille de particules comprise entre 0,05 et 30 $\mu$m à la suspension obtenue à l'étape a).

L'agent porogène solide peut être ajouté soit seul, soit dispersé dans un solvant.

Lorsqu'il est ajouté dispersé dans un solvant, le solvant peut être de l'eau, ou une phase organique (la phase organique non-miscible peut être choisie parmi les graisses, les huiles et cires minérales, les corps gras, les hydrocarbures et les coupes pétrolières). De préférence la phase organique est une coupe paraffinique ayant de 10 à 14 atomes de carbone, formée de normal- et d'iso-paraffines, et présentant un point d'ébullition compris entre 220 et 350°C. De préférence, le solvant est de l'eau.

L'agent porogène solide est choisi parmi les amidons (de riz, de maïs, de blé, de froment, de pois....), les amidons modifiés, les fécules (pomme de terre, patate douce, manioc...), les particules de latex, de polystyrène, ou d'acrylique comme par exemple les produits commerciaux (Duramax® B1000, B1014, B1007 de Rohm et Haas, Mowilith® de Clariant, etc), les polysaccharides tels que le dextrose, les dextrines, les alginates ou encore les particules de noir de carbone, les sciures de bois ou autres farines. De manière préférée, l'agent porogène solide est choisi parmi les amidons, les amidons modifiés et les fécules.

La taille des particules de l'agent porogène solide est comprise entre 0,05 $\mu$m (50 nm) et 30 $\mu$m (30000 nm), de préférence compris entre 1 $\mu$m (1000 nm) et 5 $\mu$m (5000 nm). On entend par « taille » le diamètre médian des particules de l'agent porogène solide. Selon l'invention, le diamètre médian des macropores est ajustable par le choix du porogène, notamment par le choix de la taille des particules du porogène solide.

La proportion d'agent porogène solide, exprimée comme étant le rapport de la masse d'agent porogène sur la masse totale d'oxydes (boehmite et charge éventuelle), est comprise entre 0,2 et 50%, de préférence entre 0,5 et 40%.

Selon un mode de réalisation alternatif, on effectue dans le procédé de préparation avec agent porogène solide une étape b") de cisaillement entre l'étape b) et l'étape c), dans laquelle on disperse la suspension obtenue à l'étape b) à l'aide d'un disperseur fonctionnant à un taux de cisaillement compris entre 1000 et 200000 s$^{-1}$. Cette étape permet d'augmenter la désagglomération des particules de l'agent porogène solide dans la suspension obtenue à l'étape b).

Selon l'étape c) du procédé de préparation, on mélange la suspension obtenue à l'étape b), jusqu'à ce que la viscosité dudit mélange soit comprise entre 200 et 700 mPa.s, de préférence entre 250 et 400 mPa.s. Ainsi, la solution présente les propriétés rhéologiques adaptées pour être égouttée au travers des buses du pot d'égouttage.

Le mélange de l'étape c) peut être effectué par tout dispositif de mélange apte à fournir la viscosité souhaitée, par exemple par un mobile de type trois pales inclinées. Le taux de cisaillement appliqué dans cette étape est généralement compris entre 50 s$^{-1}$ et 500 s$^{-1}$.

On entend par viscosité, la viscosité dynamique mesurée à température ambiante, au moyen par exemple d'un rhéomètre plan-plan ou cône-plan sous un cisaillement de 100 s$^{-1}$.

Selon l'étape d) du procédé de préparation, on met en forme les particules sphéroïdales par coagulation en goutte, aussi appelée la technique oil-drop, à partir du mélange obtenu à l'étape c).

Cette méthode consiste à faire passer le mélange obtenu à l'étape c), par exemple le mélange (suspension d'alumine + porogène solide) dans un pot d'égouttage constitué de buses ayant un orifice de taille calibrée de manière à former des gouttelettes. Le pot d'égouttage est placé en tête d'une colonne contenant une phase supérieure organique et une phase inférieure constituée par une phase aqueuse basique. La phase organique est choisie d'une manière telle qu'elle présente une masse volumique légèrement inférieure à celle de l'eau.

De manière préférée, l'étape d) de mise en forme des particules comprend les étapes suivantes :

> d1) on transfère le mélange dans un pot d'égouttage équipé de buses dont les orifices sont calibrés pour former des gouttelettes ;
> d2) on procède à un égouttage du mélange par gravité dans une colonne contenant une phase organique en partie supérieure et une phase aqueuse basique en partie inférieure de sorte à récolter les particules sphéroïdales en pied de phase aqueuse basique.

C'est lors du passage de la gouttelette à travers la phase organique qu'a lieu la mise en forme des sphères tandis que la gélification (ou coagulation) s'effectue dans la phase aqueuse.

Des additifs de type tensioactifs peuvent être ajoutés dans la phase aqueuse pour favoriser le passage de l'interface et la coagulation des particules dans la phase aqueuse basique.

Dans le cadre de l'invention, la phase organique non-miscible peut être choisie parmi les graisses, les huiles et cires minérales, les corps gras, les hydrocarbures et les coupes pétrolières. De préférence la phase organique est une coupe paraffinique ayant de 10 à 14 atomes de carbone, formée de normal- et d'iso-paraffines, et présentant un point d'ébullition compris entre 220 et 350°C.

La phase aqueuse basique est par exemple une solution d'ammoniaque, de carbonate d'ammonium ou d'amines. De préférence la phase aqueuse basique est une solution d'ammoniaque.

Un composé tel que l'urée peut également être introduit dans la suspension de l'étape a), puis se décomposer dans la phase aqueuse inférieure de la colonne. Ce composé, selon le brevet US4542113 permet un ajustement plus facile de la montée en viscosité.

A l'issue de l'étape de formation des particules sphéroïdales, les particules sont récupérées et séparées de la phase aqueuse, par exemple sur un tamis. Il est également possible de faire subir aux particules ainsi formées une ou plusieurs étapes de mûrissement, comme enseigné dans la demande EP 0001023.

Selon l'étape e) du procédé de préparation, on sèche les particules obtenues à l'étape d).

L'étape e) de séchage des particules sphéroïdales selon le procédé de l'invention est effectuée à une température comprise entre 40 et 150°C, sous air sec ou humide, pendant généralement entre 0,5 et 20 heures. Le protocole de séchage peut éventuellement comporter un ou plusieurs paliers en température. Il peut éventuellement requérir des taux d'hygrométrie variables au cours du séchage, de préférence entre 10 et 1000 g d'eau par kg d'air sec, de manière encore plus préférée entre 40 et 1000 g d'eau par kg d'air sec.

Selon l'étape f) du procédé de préparation, on calcine les particules obtenues à l'étape e).

L'étape f) de calcination des particules sphéroïdales est effectuée à une température comprise entre 450 et 900°C, préférentiellement comprise entre 550 et 800°C pendant 0,5 à 12 heures, de préférence entre 1 et 8 heures, de manière encore préférée entre 1 et 5 heures. Cette étape de calcination peut comprendre un ou plusieurs paliers de température.

## Variante avec agent porogène liquide

Selon une deuxième variante, l'invention concerne également un procédé de préparation des particules sphéroïdales d'alumine selon la revendication 4 comprenant les étapes suivantes :

a) on prépare une suspension comprenant de l'eau, un acide et au moins une poudre de boehmite,

b') on ajoute au moins un agent porogène liquide, au moins un tensioactif et éventuellement de l'eau, ou une émulsion comprenant au moins un agent porogène liquide, au moins un tensioactif et de l'eau à la suspension de l'étape a),

b") on disperse la suspension obtenue à l'étape b') à l'aide d'un disperseur fonctionnant à un taux de cisaillement compris entre 1000 et 200000 s$^{-1}$,

c) on mélange la suspension dispersée de l'étape b") jusqu'à ce que la viscosité dudit mélange soit comprise entre 200 et 700 mPa.s, la viscosité étant la viscosité dynamique mesurée à température ambiante sous un cisaillement de 100 $^{s-1}$,

d) on met en forme les particules sphéroïdales par coagulation en goutte à partir du mélange obtenu à l'étape c),

e) on sèche les particules obtenues à l'étape d),

f) on calcine les particules obtenues à l'étape e).

L'étape a) de ce procédé de préparation à l'aide d'un agent porogène liquide est strictement identique à l'étape a) décrite pour le procédé de préparation à l'aide d'un agent porogène solide.

Selon l'étape b') du procédé de préparation, on ajoute au moins un agent porogène liquide, au moins un tensioactif et éventuellement de l'eau, ou une émulsion comprenant au moins un agent porogène liquide, au moins un tensioactif et de l'eau à la suspension de l'étape a).

L'agent porogène liquide peut être ajouté sous forme d'une émulsion comprenant au moins un agent porogène liquide, au moins un tensioactif et de l'eau. Lorsqu'une émulsion est préparée dans l'étape b'), la préparation de l'émulsion se fait en mélangeant l'agent porogène, le tensio-actif et l'eau. La quantité d'eau dans l'émulsion représente de 5 à 20 % poids de la quantité d'eau totale correspondant au mélange (suspension de boehmite et émulsion). L'émulsion est préparée à une température comprise entre 15 et 60°C, de préférence entre 20 et 40°C.

Il est également possible d'ajouter l'agent porogène liquide, le tensio-actif et optionnellement de l'eau directement dans la suspension aqueuse contenant la boehmite, c'est-à-dire sans formation d'une émulsion au préalable, soit en les ajoutant en même temps, soit par des étapes successives. Dans ce cas, on utilise les mêmes proportions des différents constituants décrites ci-dessous.

L'agent porogène liquide est un produit non totalement miscible dans l'eau, éliminable par combustion et liquide à température ambiante. L'agent porogène liquide peut être choisi parmi les graisses, les huiles et cires minérales, les corps gras, les hydrocarbures et les coupes pétrolières. Par exemple, l'agent porogène liquide est une coupe paraffinique ayant de 10 à 14 atomes de carbone, formée de normal- et d'iso-paraffines, et présentant un point d'ébullition compris entre 220 et 350°C.

La proportion d'agent porogène liquide, exprimée comme étant le rapport de la masse d'agent porogène sur la masse totale d'oxydes (boehmite et charge éventuelle) est comprise entre 0,2 et 50% en poids, de préférence entre 0,5 et 45%.

La phase non miscible dans l'eau tenant lieu d'agent porogène liquide est dispersée à l'aide de tensio-actifs. Les tensio-actifs qui conviennent particulièrement bien sont les tensio-actifs non-ioniques ou les tensio-actifs ioniques, seuls ou en mélanges. On pourra utiliser tout tensio-actif ou mélange émulsifiant non-ionique, anionique ou cationique de HLB compris en 7 et 16 permettant la fabrication d'une émulsion huile dans eau : on peut citer toute formulation commerciale comme le Galoryl®EM10 ou l'Oparyl®EM10 ou fabriquée à partir de familles chimiques telles que les esters de sorbitan éthoxylés ou non (comme les Tween®80 et Span®80 de CRODA), les blocs copolymères oxyde d'éthylène (OE)/oxyde de propylène (OP) (comme le Synperonic®PEL121 de CRODA), les alcools ou les acides gras éthoxylés (comme le Simulsol® ox1309L de SEPPIC ou le Rhodasurf® TR/6 de Solvay), les esters d'acides gras éthoxylés (comme l'Atlas® G1086 de CRODA), les octylphénols éthoxylés (comme le TRITON® X-100 de Union Carbide), seuls ou en mélange.

Le terme « HLB » signifie "balance hydrophile/lipophile". Adaptée plus spécifiquement aux composés non ioniques, cette notion exprime la relation entre l'hydrophilie et la lipophilie des molécules d'agents de surface et permet en conséquence de prévoir les applications possibles de ces molécules en fonction de leur composition. La classification HLB est établie par le rapport entre la chaîne grasse et le groupement soluble dans l'eau et varie entre 0 (complètement lipophile) et 20 (complètement hydrophile). La valeur HLB d'un tensioactif peut se calculer lorsque sa structure chimique est parfaitement définie ou encore être déterminée expérimentalement. Le classement de HLB se fait dans l'échelle de Davies comprise entre 1 et 20. La valeur de 1 correspond à l'acide oléique alors que la valeur de 20 correspond à l'oléate de potassium. Par conséquent, on peut, par neutralisation progressive de l'acide oléique, obtenir tous les mélanges intermédiaires de valeur HLB comprise entre 1 et 20 et les comparer avec d'autres tensioactifs de valeur HLB inconnue pour déterminer leurs propriétés.

La proportion de tensioactif présent dans l'émulsion est définie comme étant égale au rapport de la masse de tensioactif sur la masse de porogène. Ce rapport est compris entre 1 et 25% en poids, de préférence entre 1 et 15% et de manière très préférée entre 3 et 10%.

Selon l'étape b") du procédé de préparation, on disperse la suspension obtenue à l'étape b') à l'aide d'un disperseur fonctionnant à un taux de cisaillement compris entre 1000 et 200000 s$^{-1}$.

On entend par « taux de cisaillement » une vitesse de cisaillement. L'application d'un taux de cisaillement tel que défini à la suspension obtenue à l'étape b") permet de créer un optimum dans la distribution macroporeuse, exprimée par un ratio D90/D50, conduisant ainsi à une valeur moyenne d'écrasement grain par grain (EGG), et donc à une résistance mécanique, améliorées. Le taux de cisaillement fourni audit mélange lors de cette étape b") permet de répartir l'agent porogène liquide dans la matrice aluminique contenue dans la suspension. C'est en effet lors de cette étape que l'agent porogène liquide contenu dans le mélange est homogènement dispersé dans ladite matrice aluminique (boehmite) contenue dans ledit mélange sous forme des petites gouttelettes de tailles sensiblement homogènes afin de créer par la suite, après la calcination, la macroporosité responsable de l'amélioration de la résistance mécanique.

La dispersion selon l'étape b") peut être réalisée par tout moyen approprié à l'aide de tout mélangeur dynamique en batch ou en continu connu de l'Homme de l'art. Conviennent particulièrement les dispositifs constitués d'un agitateur rotatif comprenant un ou plusieurs mobiles fixés sur un arbre, qui dissipent des puissances volumiques de l'ordre de $10^3$ à $10^9$ W/m$^3$ plus particulièrement de l'ordre de $10^6$ à $10^8$ W/m$^3$. Le cisaillement dépend des caractéristiques du mobile, en particulier de sa géométrie. Des dispositifs de ce genre sont par exemple des mélangeurs à rotor et stator (par exemple ceux commercialisés par la société VMI Rayneri sous la marque Ultramix®), des moulins colloïdaux, des homogénéisateurs haute pression ou encore des dispositifs à ultrasons. Par " cisaillement " on doit comprendre un " taux de cisaillement" ou un "gradient de vitesse", qui sont deux expressions synonymes pour l'Homme de l'art. La notion de "gradient de vitesse moyen" dans une cuve agitée est définie par exemple dans l'article " Agitation Mélange - concepts théoriques de base ", écrits par Michel Roustan, Jean-Claude Pharamond, Alain Liné de l'ouvrage " Techniques de l'ingénieur, traité Génie des Procédés - J3 800 , page 13". Cette notion est par exemple utilisée dans le brevet US 6,638,918, qui la décrit de la même manière que dans la référence précédente. Ainsi, on peut exprimer le cisaillement moyen ($\Gamma_{moyen}$) dans le milieu dispersé par la formule :

$$\Gamma_{moyen} = k\ N$$

dans laquelle k est une constant de proportionnalité qui dépend du type de pale du mélangeur et de la configuration de la cuve du mélangeur et N est la vitesse des mobiles d'agitation (en s$^{-1}$) . $\Gamma_{moyen}$ est exprimé en s$^{-1}$. On associe à cette notion de cisaillement une vitesse périphérique exprimée par l'expression :

$$V_{périph} = \pi\ N\ D$$

dans laquelle D est le diamètre des mobiles d'agitation exprimé en mètre et N leur vitesse de rotation exprimée en s$^{-1}$.

Selon l'invention, on entend par "mélange sous cisaillement", une dispersion effectuée sous une agitation à une vitesse périphérique, typiquement supérieure à 4 ms$^{-1}$, de préférence supérieure ou égale à 10 ms$^{-1}$, et encore plus préférentiellement comprise entre 10 ms$^{-1}$ et 40 ms$^{-1}$, qui impartit un taux de cisaillement au milieu dispersé, typiquement compris entre 1000 et 200000 s$^{-1}$, de préférence compris entre 1300 s$^{-1}$ et 20000 s$^{-1}$.

En fonction du niveau de cisaillement recherché, l'Homme du métier saura utiliser un système d'agitation ayant une géométrie adaptée et le mettre en oeuvre à une vitesse de rotation suffisante pour atteindre la vitesse de rotation et le niveau de cisaillement recherchés. Selon la nature du système d'agitation et la taille du réacteur, la vitesse de rotation peut à titre d'exemple être comprise entre 100 tr.min$^{-1}$ et 30 000 tr.min$^{-1}$.

L'Homme du métier pourra aisément extrapoler ce mode de fonctionnement et le transposer à d'autres outils du même type. Il pourra s'appuyer par exemple sur l'article de C.Dalmazzone, Génération mécanique des émulsions, Oil & Gas Science Technology, 55, 2000, n°3, pp. 281-305, pour cibler une taille moyenne de goutte en fonction du type d'agitateur et de la puissance générée.

Dans le cas d'une dispersion en batch, la dispersion dans l'étape b") est effectuée pendant une durée comprise entre 1 et 60 minutes, de préférence comprise entre 1 et 30 minutes, de manière plus préférée comprise entre 1 et 15 minutes, et de manière particulièrement préférée comprise entre 1 et 5 minutes.

La température à laquelle la dispersion est effectuée dans l'étape b") est comprise entre 20 et 45°C, de préférence entre 20 et 40°C. On veillera toutefois à éviter un échauffement du système susceptible de dégrader les tensio-actifs.

Les étapes c) de mélange, d) de mise en forme, e) de séchage et f) de calcination du procédé de préparation à l'aide d'un agent porogène liquide sont strictement identiques aux étapes c), d), e) et f) décrites pour le procédé de préparation à l'aide d'un agent porogène solide.

## Variante avec agent porogène solide et agent porogène liquide

Les deux variantes de procédé de préparation décrits ci-avant peuvent être mises en oeuvre seules telles que décrites ou mélangées pour donner lieu à d'autres modes de préparation hybrides en fonction des contraintes techniques et pratiques.

Selon un mode de réalisation, dans le procédé de préparation par agent porogène liquide, on ajoute au moins un agent porogène solide ayant une taille de particules comprise entre 0,05 et 30 μm à la suspension de l'étape b'). Dans ce cas, le procédé de préparation est effectué en présence d'un agent porogène solide et d'un agent porogène liquide. Ce procédé de préparation permet ainsi d'obtenir des particules sphéroïdales d'alumine pouvant présenter une porosité trimodale (mésoporosité résultant de l'organisation des plaquettes de boehmite et deux tailles de macroporosité, une apportée par l'agent porogène liquide, l'autre apportée par l'agent porogène solide).

## Utilisation des particules sphéroïdales d'alumine en tant que support catalytique

Les particules sphéroïdales d'alumine trouvent une application en tant que support de catalyseur pour des réactions catalytiques, notamment dans le reformage catalytique des essences.

Les procédés de reformage catalytique permettent d'augmenter significativement l'indice d'octane des fractions essences provenant de la distillation directe du pétrole brut et/ou d'autres procédés de raffinage tels que par exemple le craquage catalytique ou le craquage thermique. Le procédé de reformage catalytique est un procédé très largement utilisé par les raffineurs pour valoriser l'essence lourde obtenue par distillation. Les hydrocarbures de la charge d'essence lourde (notamment les paraffines et les naphtènes) contenant environ 5 à 12 atomes de carbone par molécule sont transformés au cours de ce procédé en hydrocarbures aromatiques et en paraffines branchées. Cette transformation est obtenue à haute température (en moyenne dans la gamme 480 à 520°C), à pression basse à moyenne (0,2 à 2,5 MPa) et en présence d'un catalyseur. Le reformage catalytique produit du reformat qui permet d'améliorer significativement l'indice d'octane des coupes pétrolières, et de l'hydrogène. Le reformat est majoritairement formé de composés en C$_5^+$ (contenant au moins 5 atomes de carbone).

La charge typique traitée lors du reformage catalytique comprend des hydrocarbures paraffiniques, naphténiques et aromatiques contenant de 5 à 12 atomes de carbone par molécule. Cette charge est définie, entre autres, par sa densité et sa composition pondérale. Cette charge est mise en contact avec le catalyseur selon la présente invention à une température comprise entre 300 et 700°C, de préférence entre 350 et 550°C et de manière encore plus préférée entre 380 et 530°C. Le débit massique de charge traitée par unité de masse du catalyseur peut varier entre 0,1 et 10 kg/(kg.h), de préférence entre 0,5 et 6 kg/(kg.h). La pression opératoire peut être fixée entre la pression atmosphérique (0,1 MPa) et 4 MPa, de préférence entre 0,2 MPa et 3 MPa. Une partie de l'hydrogène produit est recyclé pour atteindre un rapport molaire hydrogène recyclé sur charge hydrocarbonée compris entre 0,1 et 10, de préférence entre 1 et 8.

Les catalyseurs de reformage sont des solides poreux comprenant généralement de l'alumine très pure comme support, du chlore, du platine et au moins un métal additionnel choisi dans le groupe formé par les métaux des groupes IA, IIA, VIB, VIIIB, IIIA et IVA. Ce sont des catalyseurs bifonctionnels, c'est-à-dire qu'ils sont constitués de deux fonctions, une fonction métallique et une fonction acide, chacune des fonctions ayant un rôle bien défini dans l'activité du catalyseur. La fonction métallique assure essentiellement la déshydrogénation des naphtènes et des paraffines et l'hydrogénation des précurseurs de coke. La fonction acide assure l'isomérisation des naphtènes et des paraffines et la cyclisation des paraffines. La fonction acide est apportée par le support lui-même, le plus souvent une alumine pure halogénée. La fonction métallique est assurée par un métal noble de la famille du platine et au moins un métal additionnel, principalement l'étain pour le procédé continu (lit mobile), et principalement le rhénium dans le procédé semi-régénératif (lit fixe).

La divulgation se rapporte ainsi également à un catalyseur comprenant au moins un ou plusieurs métaux noble choisis parmi le groupe VIIIB du tableau périodique, notamment le platine, déposé(s) sur un support formé par des particules sphéroïdales d'alumine obtenues par les procédés de préparation selon la présente invention. La teneur en métal noble dans le catalyseur se situe entre 0,02 à 2% poids, de préférence entre 0,05 et 1,5% poids, de manière encore plus préférée entre 0,1 et 0,8% poids.

Le catalyseur peut inclure éventuellement également au moins un promoteur choisi parmi les groupes IA, IIA, IIIA, IVA, et VA du tableau périodique. Ces éléments promoteurs sont présents dans le catalyseur, à une teneur exprimé en oxyde généralement comprise entre 0,01 à 2% poids de catalyseur, de manière préférée entre 0,05 et 1% poids.

Le catalyseur peut également comprendre de préférence un composé halogéné, sélectionné dans le groupe constitué par le fluor, le chlore, le brome et l'iode. La teneur en composé halogéné est généralement comprise entre 0,1 et 8% poids, de préférence entre 0,2 et 5% poids de catalyseur après calcination. De préférence, le composé halogéné est le chlore.

Le catalyseur est préparé selon des procédés de préparation connus par l'Homme du métier, par exemple décrits dans FR2932101 ou encore EP 2 441 516.

Conformément à un mode de réalisation, on peut incorporer les éléments dits "promoteurs" lors de la formation desdites particules. A cette fin, on ajoute dans la suspension aqueuse de poudre de boehmite un sel soluble d'un ou plusieurs éléments choisis parmi les groupes IA, IIA, IIIA, IVA, VA du tableau périodique des éléments. Conformément à un autre mode de réalisation, on peut incorporer tout ou partie des promoteurs sur le support déjà formé, par exemple par imprégnation.

Avant l'utilisation du catalyseur dans le reformage catalytique il est soumis à un traitement sous hydrogène afin d'obtenir une phase métallique active dans des conditions opératoires connues de l'Homme du métier.

A titre d'exemple, un catalyseur utile comme catalyseur de reformage de coupe pétrolière peut comprendre du platine, de l'étain (optionnellement d'autres métaux) et du chlore, déposés sur un support sphéroïdal d'alumine selon invention.

Enfin ces catalyseurs peuvent aussi trouver des applications dans le reformage à la vapeur, le craquage, l'hydrocraquage, l'hydrogénation, la déshydrogénation, la déshydrocyclisation d'hydrocarbures ou d'autres composés organiques. Ce type de catalyseur trouve son application notamment dans un procédé continu de reformage catalytique en lit mobile.

Exemples

Dans l'ensemble des exemples 1 à 4 suivants, seule diffère la phase de préparation du mélange de la suspension de boehmite et d'agent porogène (étape b") de dispersion) utilisée pour l'égouttage. Après cette phase de formulation, le système est soumis à une agitation (étape c) de mélange) à 600 tours/minute avec un mobile 3 pales inclinées jusqu'à l'obtention d'une suspension aux propriétés rhéologiques adaptées à son égouttage (viscosité 250 mPa.s). La viscosité a été mesurée à l'aide d'un rhéomètre cône-plan à un taux de cisaillement de 100s$^{-1}$.

La colonne d'égouttage est chargée avec une solution ammoniacale à une concentration de 28g/L et une solution organique constituée par la même coupe pétrolière que celle utilisée comme agent porogène dans la préparation de l'émulsion (phase organique en couche supérieure). La suspension est égouttée par l'intermédiaire de buses calibrées. Les billes sont récupérées en fond de colonne et placées dans une étuve ventilée à 120°C pendant 12h. Elles sont ensuite calcinées sous air sec à 650°C pendant 3 heures.

Pour l'ensemble de ces exemples, les caractéristiques texturales sont comparables afin de démontrer l'impact de la préparation et l'apport de l'optimisation du ratio D90/D50 sur les propriétés mécaniques du matériau. Ces exemples ne sont donc pas limitatifs et pourraient être extrapolés à d'autres systèmes présentant des quantités de porogène/textures différentes.

Exemple 1 (comparatif)

Le support de l'exemple 1 est préparé en utilisant une boehmite de type Pural SB3 commercialisée par Sasol.

Une suspension contenant 20% de matière minérale (exprimée en % poids d'$Al_2O_3$) est préparée en mélangeant une charge d'alumine $\gamma$ ayant un diamètre médian en volume de 50 $\mu$m et la poudre de boehmite Pural SB3 dans une solution aqueuse acidifiée contenant 3,6% poids d'$HNO_3/Al_2O_3$.

La fraction solide d'$Al_2O_3$ est apportée à 88% poids par la boehmite et à 12% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm$^3$. Le tensioactif est du Galoryl® EM10, agent émulsionnant commercial. Ces composés sont introduits dans les proportions suivantes : fraction massique de porogène / eau = 9,4% et fraction massique de tensioactif / porogène = 6%.

Dans cet exemple, après ajout de tous les composés, la suspension est directement soumise à un mélange jusqu'à ce que la viscosité du mélange soit comprise entre 250 et 400mPa.s. A cette viscosité, la suspension présente les propriétés rhéologiques adaptées à un égouttage au travers de buses. Dans cet exemple non-conforme, l'étape b") de dispersion n'est donc pas effectuée. Les caractéristiques des billes obtenues après séchage et calcination sont données dans le tableau 1.

Exemple 2 (conforme)

La composition du matériau est la même que dans l'exemple 1. Dans cet exemple, on joue sur les conditions d'émulsification (durée, vitesse appliquée) de l'étape b"). Dans cet exemple, après ajout de tous les composés, la suspension passe à travers un dispositif rotor/stator dans lequel le taux de cisaillement est de 1400 s$^{-1}$ pendant 5 minutes. Ensuite, la suspension est maintenue sous agitation jusqu'à ce que la viscosité du mélange soit comprise entre 250 et 400mPa.s. A cette viscosité, la suspension présente les propriétés rhéologiques adaptées à un égouttage au travers de buses. Les caractéristiques des billes obtenues après séchage et calcination sont données dans le tableau 1.

On note qu'à iso propriétés texturales, l'amélioration de la résistance mécanique par rapport aux billes de l'exemple 1 préparées sans système de dispersion (étape c) est liée à la diminution du ratio D90/D50.

Exemple 3 (conforme)

La composition du matériau est la même que dans l'exemple 1. Dans cet exemple, on joue sur les conditions d'émulsification (durée, vitesse appliquée) de l'étape b"). Dans cet exemple, après ajout de tous les composés, la suspension passe à travers un dispositif rotor/stator dans lequel le taux de cisaillement est de 5000 s$^{-1}$ pendant 5 minutes. Ensuite, la suspension est maintenue sous agitation jusqu'à ce que la viscosité du mélange soit comprise entre 250 et 400mPa.s. A cette viscosité, la suspension présente les propriétés rhéologiques adaptées à un égouttage au travers de buses. Les caractéristiques des billes obtenues après séchage et calcination sont données dans le tableau 1.

On note que l'augmentation du taux de cisaillement par rapport à l'exemple 2 dans le système de dispersion permet de diminuer le rapport D90/D50, ceci ayant une conséquence directe sur la résistance mécanique qui se trouve améliorée.

Exemple 4 (conforme)

La composition du matériau est la même que dans l'exemple 1. Dans cet exemple, on joue sur les conditions d'émulsification (durée, vitesse appliquée) de l'étape b"). Dans cet exemple, après ajout de tous les composés, la suspension passe à travers un dispositif rotor/stator dans lequel le taux de cisaillement est de 5000 s$^{-1}$ pendant 1 minute 30. Ensuite, la suspension est maintenue sous agitation jusqu'à ce que la viscosité du mélange soit comprise entre 250 et 400mPa.s. A cette viscosité, la suspension présente les propriétés rhéologiques adaptées à un égouttage au travers de buses. Les caractéristiques des billes obtenues après séchage et calcination sont données dans le tableau.

On note qu'à iso taux de cisaillement, la diminution de la durée d'émulsification par rapport à l'exemple 3 augmente le rapport D90/D50, ceci ayant une conséquence directe sur la résistance mécanique qui se trouve légèrement dégradée.

Les exemples 5 à 8 décrivent la préparation de particules, aussi appelées billes, selon l'invention en présence d'un agent porogène solide, éventuellement en mélange avec un agent porogène liquide.

Exemple 5 (selon l'invention)

L'amidon (25% massiques par rapport à Al$_2$O$_3$) mis en suspension dans l'eau est ajouté à la suspension de boehmite peptisée de l'exemple 1. La suspension est maintenue sous agitation jusqu'à ce que la viscosité du mélange soit comprise entre 250 et 400 mPa.s. A cette viscosité, la suspension présente les propriétés rhéologiques adaptées à un égouttage au travers de buses. Les caractéristiques des billes obtenues après séchage et calcination sont données dans le tableau 1.

Le ratio D90/50 est de l'ordre de 3 et directement lié à la source d'amidon utilisée et permet d'obtenir un EGG amélioré.

Exemple 6 (selon l'invention)

Dans cet exemple, la macroporosité est apportée à 50% par de l'amidon de maïs et à 50% par une émulsion telle que décrite dans l'exemple 1.

Dans cet exemple, après ajout de tous les composés, la suspension passe à travers un dispositif rotor/stator dans lequel le cisaillement est de 10000 s$^{-1}$ pendant 5 minutes. Ensuite, la suspension est maintenue sous agitation jusqu'à ce que la viscosité du mélange soit comprise entre 250-400 mPa.s. A cette viscosité, la suspension présente les propriétés rhéologiques adaptées à un égouttage au travers de buses. Les caractéristiques des billes obtenues après séchage et calcination sont données dans le tableau.

Le ratio D90/50 est de 2,61 et permet d'obtenir un EGG amélioré.

Exemple 7 (selon l'invention)

Dans cet exemple, la macroporosité est apportée à 50% par de l'amidon de riz et à 50% par une émulsion telle que décrite dans l'exemple 1.

Dans cet exemple, après ajout de tous les composés, la suspension passe à travers un dispositif rotor/stator dans lequel le cisaillement est de 10000 s$^{-1}$ pendant 5 minutes. Ensuite, la suspension est maintenue sous agitation jusqu'à ce que la viscosité du mélange soit comprise entre 250-400 mPa.s. A cette viscosité, la suspension présente les propriétés rhéologiques adaptées à un égouttage au travers de buses. Les caractéristiques des billes obtenues après séchage et calcination sont données dans le tableau.

Le ratio D90/50 est de 3,55 et permet d'obtenir un EGG amélioré.

Exemple 8 (selon l'invention)

Dans cet exemple, la macroporosité est apportée à 25% par de l'amidon de riz et à 75% par une émulsion telle que décrite dans l'exemple 1.

La suspension est maintenue sous agitation jusqu'à ce que la viscosité du mélange soit comprise entre 250 et 400 mPa.s. A cette viscosité, la suspension présente les propriétés rhéologiques adaptées à un égouttage au travers de buses. Les caractéristiques des billes obtenues après séchage et calcination sont données dans le tableau 1.

Le ratio D90/50 est de l'ordre de 2,90 et directement lié à la source d'amidon utilisée et permet d'obtenir un EGG amélioré.

Tableau 1

| $S_{BET}$ (m$^2$/g) | VPT (mL/g) | Dp à $V_{méso/2}$ (nm) | Pmacro (%) | EGG (N) | Diam. moyen des billes (mm) | Ecart type (diam billes) | D90 /D50 |
|---|---|---|---|---|---|---|---|
| Exemple 1 (non-conforme) : sans étape c) | | | | | | | |
| 208 | 0,68 | 10,7 | 18 | 22,0 | 1,84 | 0,09 | 8,15 |
| Exemple 2 (conforme) : agent porogène liquide, taux de cisaillement = 1400 s$^{-1}$, durée 5 min | | | | | | | |
| 203 | 0,68 | 10,4 | 18 | 27,6 | 1,66 | 0,07 | 3,85 |
| Exemple 3 (conforme) : agent porogène liquide, taux de cisaillement = 5000 s$^{-1}$, durée 5 min | | | | | | | |
| 203 | 0,71 | 10,3 | 18 | 33,5 | 1,72 | 0,07 | 2,66 |
| Exemple 4 (conforme) : agent porogène liquide, taux de cisaillement = 5000 s$^{-1}$, durée 1 min 30 | | | | | | | |
| 198 | 0,70 | 10,8 | 18 | 30,9 | 1,81 | 0,08 | 3,32 |
| Exemple 5 (conforme) : agent porogène solide | | | | | | | |
| 227 | 0,71 | 8,7 | 18 | 29,0 | 1,90 | 0,09 | 3,05 |
| Exemple 6 (conforme) : agent porogène solide et agent porogène liquide | | | | | | | |
| 238 | 0,63 | 8,7 | 18 | 32,1 | 1,61 | 0,09 | 2,61 |
| Exemple 7 (conforme) : agent porogène solide et agent porogène liquide | | | | | | | |
| 213 | 0,73 | 9,8 | 18 | 29,5 | 1,74 | 0,05 | 3,55 |

(suite)

| $S_{BET}$ (m$^2$/g) | VPT (mL/g) | Dp à $V_{méso/2}$ (nm) | Pmacro (%) | EGG (N) | Diam. moyen des billes (mm) | Ecart type (diam billes) | D90 /D50 |
|---|---|---|---|---|---|---|---|
| Exemple 8 (conforme) : agent porogène solide et agent porogène liquide | | | | | | | |
| 223 | 0,76 | 10,4 | 19 | 33,0 | 1,69 | 0,09 | 2,90 |

**Revendications**

1. Procédé de fabrication de particules sphéroïdales présentant une surface spécifique B.E.T comprise entre 150 et 300 m$^2$/g, un diamètre moyen de particule compris entre 1,2 et 3 mm et une dispersion des diamètres des particules exprimée par un écart type n'excédant pas 0,1, un volume poreux total mesuré par porosimétrie au mercure compris entre 0,50 et 0,85 mL/g, un taux de macroporosité au sein d'une particule inférieur à 30 % et dans lesquelles la dispersion des diamètres des macropores, c'est-à-dire des pores dont l'ouverture est supérieure à 50 nm, exprimée par le ratio des diamètres D90/D50 n'excède pas 8, avec D50 étant le diamètre médian macroporeux défini comme étant le diamètre tel que parmi l'ensemble des pores constituant le volume macroporeux, tous les pores de taille inférieure à ce diamètre constituent 50% du nombre de macropores, et avec D90 étant le diamètre médian macroporeux défini comme étant le diamètre tel que, parmi l'ensemble des pores constituant le volume macroporeux, tous les pores de taille inférieure à ce diamètre constituent 90% du nombre de macropores, ledit procédé comprenant les étapes suivantes :

    a) on prépare une suspension comprenant de l'eau, un acide et au moins une poudre de boehmite,
    b) on ajoute un agent porogène solide ayant une taille de particules comprise entre 0,05 et 30 μm à la suspension obtenue à l'étape a),
    c) on mélange la suspension obtenue à l'étape b), jusqu'à ce que la viscosité dudit mélange soit comprise entre 200 et 700 mPa.s, la viscosité étant la viscosité dynamique mesurée à température ambiante sous un cisaillement de 100 s$^{-1}$,
    d) on met en forme les particules sphéroïdales par coagulation en goutte à partir du mélange obtenu à l'étape c),
    e) on sèche les particules obtenues à l'étape d),
    f) on calcine les particules obtenues à l'étape e).

2. Procédé selon la revendication précédente, dans lequel l'agent porogène solide est choisi parmi les amidons, les fécules, les particules de latex, de polystyrène, ou d'acrylique, les polysaccharides, les particules de noir de carbone et les sciures de bois.

3. Procédé selon l'une des revendications précédentes, dans lequel la proportion d'agent porogène solide, exprimée comme étant le rapport de la masse d'agent porogène sur la masse totale d'oxydes est comprise entre 0,2 et 50% en poids.

4. Procédé de fabrication de particules sphéroïdales présentant une surface spécifique B.E.T comprise entre 150 et 300 m$^2$/g, un diamètre moyen de particule compris entre 1,2 et 3 mm et une dispersion des diamètres des particules exprimée par un écart type n'excédant pas 0,1, un volume poreux total mesuré par porosimétrie au mercure compris entre 0,50 et 0,85 mL/g, un taux de macroporosité au sein d'une particule inférieur à 30 % et dans lesquelles la dispersion des diamètres des macropores, c'est-à-dire des pores dont l'ouverture est supérieure à 50 nm, exprimée par le ratio des diamètres D90/D50 n'excède pas 8, avec D50 étant le diamètre médian macroporeux défini comme étant le diamètre tel que parmi l'ensemble des pores constituant le volume macroporeux, tous les pores de taille inférieure à ce diamètre constituent 50% du nombre de macropores, et avec D90 étant le diamètre médian macroporeux défini comme étant le diamètre tel que, parmi l'ensemble des pores constituant le volume macroporeux, tous les pores de taille inférieure à ce diamètre constituent 90% du nombre de macropores, ledit procédé comprenant les étapes suivantes :

    a) on prépare une suspension comprenant de l'eau, un acide et au moins une poudre de boehmite,
    b') on ajoute au moins un agent porogène liquide, au moins un tensioactif et éventuellement de l'eau, ou une émulsion comprenant au moins un agent porogène liquide, au moins un tensioactif et de l'eau à la suspension de l'étape a),

b") on disperse la suspension obtenue à l'étape b') à l'aide d'un disperseur fonctionnant à un taux de cisaillement compris entre 1000 et 200000 s$^{-1}$,

c) on mélange la suspension dispersée de l'étape b") jusqu'à ce que la viscosité dudit mélange soit comprise entre 200 et 700 mPa.s, la viscosité étant la viscosité dynamique mesurée à température ambiante sous un cisaillement de 100 s$^{-1}$,

d) on met en forme les particules sphéroïdales par coagulation en goutte à partir du mélange obtenu à l'étape c),

e) on sèche les particules obtenues à l'étape d),

f) on calcine les particules obtenues à l'étape e).

**5.** Procédé selon la revendication précédente, dans lequel l'agent porogène liquide est choisi parmi les graisses, les huiles et cires minérales, les corps gras, les hydrocarbures et les coupes pétrolières et le tensio-actif est choisi parmi un tensio-actif non-ionique ou ionique.

**6.** Procédé selon les revendications 4 ou 5, dans lequel la proportion d'agent porogène liquide, exprimée comme étant le rapport de la masse d'agent porogène liquide sur la masse totale d'oxydes est comprise entre 0,2 et 50 % en poids et dans lequel la proportion de tensioactif, définie comme étant égale au rapport de la masse de tensioactif sur la masse de l'agent porogène, est comprise entre 1 et 25% en poids.

**7.** Procédé selon l'une des revendications 4 à 6, dans lequel, à la suspension de l'étape b'), on ajoute en outre au moins un agent porogène solide ayant une taille de particules comprise entre 0,05 et 30 μm.

**8.** Procédé selon l'une des revendications précédentes, dans lequel la suspension de l'étape a) comprend en outre une charge d'alumine ou de précurseur d'alumine constituée de particules ayant un diamètre médian en volume inférieur ou égal à 50 μm.

**9.** Procédé selon l'une des revendications 4 à 7, **caractérisé en ce que** le taux de cisaillement à l'étape b") de dispersion de la suspension obtenue à l'étape b') à l'aide d'un disperseur est compris entre 1300 et 20000 s$^{-1}$.

**10.** Procédé selon l'une des revendications précédentes, **caractérisé en ce que** les particules sphéroïdales d'alumine présentent une valeur de densité de remplissage tassée est comprise entre 0,4 et 0,8 g/mL.

**11.** Procédé selon l'une des revendications précédentes, **caractérisé en ce que** les particules sphéroïdales d'alumine présentent une valeur moyenne d'écrasement grain par grain est d'au moins 25 N.

**12.** Procédé selon l'une des revendications précédentes, **caractérisé en ce que** les particules sphéroïdales d'alumine présentent un volume poreux total mesuré par porosimétrie au mercure est compris entre 0,60 et 0,85 mL/g.

**13.** Procédé selon l'une des revendications précédentes, **caractérisé en ce que** les particules sphéroïdales d'alumine présentent une dispersion des diamètres des macropores exprimée par le ratio des diamètres D90/D50 n'excède pas 6.

**Patentansprüche**

**1.** Verfahren zur Herstellung kugelähnlicher Partikel, die eine spezifische BET-Oberfläche im Bereich von 150 bis 300 m$^2$/g, einen mittleren Partikeldurchmesser im Bereich von 1,2 bis 3 mm und eine Streuung der Partikeldurchmesser, ausgedrückt durch eine Standardabweichung, von höchstens 0,1, ein Gesamtporenvolumen, gemessen mittels Quecksilberporosimetrie, im Bereich von 0,50 bis 0,85 mL/g, einen Gehalt an Makroporen innerhalb eines Partikels aufweist, der weniger als 30 % beträgt, wobei weiterhin die Streuung der Makroporendurchmesser, das heißt, der Poren, deren Weite mehr als 50 nm beträgt, nicht mehr als 8 beträgt, wenn sie als Verhältnis der Durchmesser D90/50 ausgedrückt wird, wobei D50 dem Medianwert des Makroporendurchmessers entspricht, welcher als derjenige Durchmesser definiert ist, bei welchem von der Gesamtheit der Poren, die das Makroporenvolumen bilden, sämtliche Poren, deren Größe geringer als dieser Durchmesser ist, 50 % der Anzahl an Makroporen ausmachen, und wobei D90 dem Medianwert des Makroporendurchmessers entspricht, welcher als derjenige Durchmesser definiert ist, bei welchem von der Gesamtheit der Poren, die das Makroporenvolumen bilden, sämtliche Poren, deren Größe geringer als dieser Durchmesser ist, 90 % der Anzahl an Makroporen ausmachen, wobei das Verfahren die folgenden Schritte umfasst:

a) Herstellen einer Suspension, die Wasser, eine Säure und mindestens ein Boehmit-Pulver umfasst,

b) Hinzufügen eines feststofflichen porenbildenden Mittels, dessen Partikelgröße im Bereich von 0,05 bis 30 μm liegt, zu der Suspension, wie sie im Schritt a) erhalten wurde,

c) Vermischen der Suspension, wie sie im Schritt b) erhalten wurden, bis die Viskosität der Mischung im Bereich von 200 bis 700 mPa.s liegt, wobei es sich bei der Viskosität um die dynamische Viskosität handelt, wie sie bei Raumtemperatur unter einer Scherwirkung von 100 s$^{-1}$ gemessen wird,

d) Formen der kugelähnlichen Partikel mittels Tropfenkoagulation ausgehend von der Mischung, wie sie im Schritt c) erhalten wurde,

e) Trocknen der Partikel, wie sie im Schritt d) erhalten wurden,

f) Brennen der Partikel, wie sie im Schritt e) erhalten wurden.

2. Verfahren nach dem vorhergehenden Anspruch, wobei das feststoffliche porenbildende Mittel aus den Getreidestärkesorten, den Knollen- und Spross-Stärkesorten, den Partikeln aus Latex, aus Polystyrol oder aus Acrylstoffen, den Polysacchariden, den Rußpartikeln und den Sägespänen ausgewählt ist.

3. Verfahren nach einem der vorhergehenden Ansprüche, wobei der Anteil an feststofflichem porenbildendem Mittel, ausgedrückt als Verhältnis der Masse an porenbildendem Mittel zur Gesamtmasse an Oxiden, im Bereich von 0,2 bis 50 Gewichts-% liegt.

4. Verfahren zur Herstellung kugelähnlicher Partikel, die eine spezifische BET-Oberfläche im Bereich von 150 bis 300 m$^2$/g, einen mittleren Partikeldurchmesser im Bereich von 1,2 bis 3 mm und eine Streuung der Partikeldurchmesser, ausgedrückt durch eine Standardabweichung, von höchstens 0,1, ein Gesamtporenvolumen, gemessen mittels Quecksilberporosimetrie, im Bereich von 0,50 bis 0,85 mL/g, einen Gehalt an Makroporen innerhalb eines Partikels aufweist, der weniger als 30 % beträgt, wobei weiterhin die Streuung der Makroporendurchmesser, das heißt, der Poren, deren Weite mehr als 50 nm beträgt, nicht mehr als 8 beträgt, wenn sie als Verhältnis der Durchmesser D90/50 ausgedrückt wird, wobei D50 dem Medianwert des Makroporendurchmessers entspricht, welcher als derjenige Durchmesser definiert ist, bei welchem von der Gesamtheit der Poren, die das Makroporenvolumen bilden, sämtliche Poren, deren Größe geringer als dieser Durchmesser ist, 50 % der Anzahl an Makroporen ausmachen, und wobei D90 dem Medianwert des Makroporendurchmessers entspricht, welcher als derjenige Durchmesser definiert ist, bei welchem von der Gesamtheit der Poren, die das Makroporenvolumen bilden, sämtliche Poren, deren Größe geringer als dieser Durchmesser ist, 90 % der Anzahl an Makroporen ausmachen, wobei das Verfahren die folgenden Schritte umfasst:

a) Herstellen einer Suspension, die Wasser, eine Säure und mindestens ein Boehmit-Pulver umfasst,

b') Hinzufügen mindestens eines flüssigen porenbildenden Mittels, mindestens eines Tensids und möglicherweise von Wasser, oder einer Emulsion, die mindestens ein flüssiges porenbildendes Mittel, mindestens ein Tensid und Wasser umfasst, zu der Suspension des Schrittes a),

b") Dispergieren der Suspension, wie sie im Schritt b') erhalten wurde, mit Hilfe eines Dispergiergeräts, das mit einer Scherrate im Bereich von 1 000 bis 200 000 s$^{-1}$ betrieben wird,

c) Vermischen der dispergierten Suspension des Schrittes b"), bis die Viskosität der Mischung im Bereich von 200 bis 700 mPa.s liegt, wobei es sich bei der Viskosität um die dynamische Viskosität handelt, wie sie bei Raumtemperatur unter einer Scherwirkung von 100 s$^{-1}$ gemessen wird,

d) Formen der kugelähnlichen Partikel mittels Tropfenkoagulation ausgehend von der Mischung, wie sie im Schritt c) erhalten wurde,

e) Trocknen der Partikel, wie sie im Schritt d) erhalten wurden,

f) Brennen der Partikel, wie sie im Schritt e) erhalten wurden.

5. Verfahren nach dem vorhergehenden Anspruch, wobei das flüssige porenbildende Mittel aus den Fetten, den mineralischen Ölen und Wachsen, den Fettstoffen, den Kohlenwasserstoffen und den Erdölfraktionen ausgewählt ist und das Tensid aus einem nichtionischen oder ionischen Tensid ausgewählt ist.

6. Verfahren nach den Ansprüchen 4 oder 5, wobei der Anteil an flüssigem porenbildendem Mittel, ausgedrückt als Verhältnis der Masse an flüssigem porenbildendem Mittel zur Gesamtmasse an Oxiden, im Bereich von 0,2 bis 50 Gewichts-% liegt und wobei der Anteil an Tensid, welcher definitionsgemäß dem Verhältnis der Masse an Tensid zur Masse an porenbildendem Mittel entspricht, im Bereich von 1 bis 25 Gewichts-% liegt.

7. Verfahren nach einem der Ansprüche 4 bis 6, wobei der Suspension des Schrittes b') darüber hinaus mindestens ein feststoffliches porenbildendes Mittel zugesetzt wird, dessen Partikelgröße im Bereich von 0,05 bis 30 μm liegt.

8. Verfahren nach einem der vorhergehenden Ansprüche, wobei die Suspension des Schrittes a) darüber hinaus einen Füllstoff aus Aluminiumoxid oder einer Aluminiumoxid-Vorstufe umfasst, wobei dieser aus Partikeln besteht, deren volumenbezogener Medianwert des Durchmessers höchstens 50 $\mu$m beträgt.

9. Verfahren nach einem der Ansprüche 4 bis 7, **dadurch gekennzeichnet, dass** die Scherrate im Schritt b") des Dispergierens der Suspension, wie sie im Schritt b') mit Hilfe eines Dispergiergeräts erhalten wurde, im Bereich von 1 300 bis 20 000 s$^{-1}$ liegt.

10. Verfahren nach einem der vorhergehenden Ansprüche, **dadurch gekennzeichnet, dass** die kugelähnlichen Aluminiumoxidpartikel einen Wert der gerüttelten Einfülldichte im Bereich von 0,4 bis 0,8 g/mL haben.

11. Verfahren nach einem der vorhergehenden Ansprüche, **dadurch gekennzeichnet, dass** die kugelähnlichen Aluminiumoxidpartikel einen Mittelwert des kornweisen Zerstoßens von mindestens 25 N aufweisen.

12. Verfahren nach einem der vorhergehenden Ansprüche, **dadurch gekennzeichnet, dass** die kugelähnlichen Aluminiumoxidpartikel ein Gesamtporenvolumen aufweisen, das bei einer Messung mittels Quecksilberporosimetrie im Bereich von 0,60 bis 0,85 mL/g liegt.

13. Verfahren nach einem der vorhergehenden Ansprüche, **dadurch gekennzeichnet, dass** die kugelähnlichen Aluminiumoxidpartikel eine Streuung der Makroporendurchmesser aufweisen, die nicht mehr als 6 beträgt, wenn sie als Verhältnis der Durchmesser D90/50 ausgedrückt wird.

**Claims**

1. Process for producing spheroidal particles having a BET specific surface area of between 150 and 300 m$^2$/g, an average particle diameter of between 1.2 and 3 mm and a particle diameter distribution expressed by a standard deviation of not more than 0.1, a total pore volume measured by mercury porosimetry of between 0.50 and 0.85 mL/g, a macroporosity level within a particle of less than 30% and wherein the diameter distribution of the macropores, that is to say of the pores having an opening of greater than 50 nm, expressed by the D90/D50 diameter ratio, is not more than 8, with D50 being the median macropore diameter defined as being the diameter at which, of the totality of the pores constituting the macropore volume, all pores smaller in size than this diameter constitute 50% of the number of macropores, and with D90 being the median macropore diameter defined as being the diameter at which, of the totality of the pores constituting the macropore volume, all pores smaller in size than this diameter constitute 90% of the number of macropores, said process comprising the following steps:

   a) preparing a suspension comprising water, an acid and at least one boehmite powder,
   b) adding a solid pore-forming agent having a particle size of between 0.05 and 30 $\mu$m to the suspension obtained in step a),
   c) mixing the suspension obtained in step b) until the viscosity of said mixture is between 200 and 700 mPa·s, the viscosity being the dynamic viscosity measured at ambient temperature at a shear of 100 s$^{-1}$,
   d) forming the spheroidal particles by droplet coagulation from the mixture obtained in step c),
   e) drying the particles obtained in step d),
   f) calcining the particles obtained in step e) .

2. Process according to the preceding claim, wherein the solid pore-forming agent is selected from starches, latex particles, polystyrene particles, acrylic particles, polysaccharides, carbon black particles and sawdust.

3. Process according to either of the preceding claims, wherein the proportion of solid pore-forming agent, expressed as being the ratio of the mass of pore-forming agent to the total mass of oxides, is between 0.2% and 50% by weight.

4. Process for producing spheroidal particles having a BET specific surface area of between 150 and 300 m$^2$/g, an average particle diameter of between 1.2 and 3 mm and a particle diameter distribution expressed by a standard deviation of not more than 0.1, a total pore volume measured by mercury porosimetry of between 0.50 and 0.85 mL/g, a macroporosity level within a particle of less than 30% and wherein the diameter distribution of the macropores, that is to say of the pores having an opening of greater than 50 nm, expressed by the D90/D50 diameter ratio, is not more than 8, with D50 being the median macropore diameter defined as being the diameter at which, of the totality of the pores constituting the macropore volume, all pores smaller in size than this diameter constitute 50% of the number of macropores, and with D90 being the median macropore diameter defined as being the diameter at which, of the totality of the pores constituting the macropore volume, all pores smaller in size than this diameter constitute 90% of the number of macropores, said process comprising the following steps:

> a) preparing a suspension comprising water, an acid and at least one boehmite powder,
> b') adding at least one liquid pore-forming agent, at least one surfactant and optionally water, or an emulsion comprising at least one liquid pore-forming agent, at least one surfactant and water, to the suspension from step a),
> b") dispersing the suspension obtained in step b') with the aid of a dispersing unit operating at a shear rate of between 1000 and 200 000 s$^{-1}$,
> c) mixing the suspension dispersed in step b") until the viscosity of said mixture is between 200 and 700 mPa·s, the viscosity being the dynamic viscosity measured at ambient temperature at a shear of 100 s$^{-1}$,
> d) forming the spheroidal particles by droplet coagulation from the mixture obtained in step c),
> e) drying the particles obtained in step d),
> f) calcining the particles obtained in step e) .

5.  Process according to the preceding claim, wherein the liquid pore-forming agent is selected from fats, oils and mineral waxes, fatty substances, hydrocarbons and petroleum fractions and the surfactant is selected from a nonionic or ionic surfactant.

6.  Process according to Claim 4 or 5, wherein the proportion of liquid pore-forming agent, expressed as being the ratio of the mass of liquid pore-forming agent to the total mass of oxides, is between 0.2% and 50% by weight and wherein the proportion of surfactant, defined as being equal to the ratio of the mass of surfactant to the mass of the pore-forming agent, is between 1% and 25% by weight.

7.  Process according to any of Claims 4 to 6, wherein at least one solid pore-forming agent having a particle size of between 0.05 and 30 $\mu$m is additionally added to the suspension from step b').

8.  Process according to any of the preceding claims, wherein the suspension from step a) additionally comprises a charge of alumina or alumina precursor consisting of particles having a volume median diameter of less than or equal to 50 $\mu$m.

9.  Process according to any of Claims 4 to 7, **characterized in that** the shear rate in step b") of the dispersion of the suspension obtained in step b') with the aid of a dispersing unit is between 1300 and 20 000 s$^{-1}$.

10. Process according to any of the preceding claims, **characterized in that** the spheroidal alumina particles have a tapped filling density value of between 0.4 and 0.8 g/mL.

11. Process according to any of the preceding claims, **characterized in that** the spheroidal alumina particles have an average single-pellet crush strength value of at least 25 N.

12. Process according to any of the preceding claims, **characterized in that** the spheroidal alumina particles have a total pore volume measured by mercury porosimetry of between 0.60 and 0.85 mL/g.

13. Process according to any of the preceding claims, **characterized in that** the spheroidal alumina particles have a diameter distribution of the macropores, expressed by the D90/D50 diameter ratio, of not more than 6.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2422499 A
- FR 1503495
- CN 10231134
- WO 2013093221 A
- US 4542113 A
- EP 0001023 A
- US 6638918 B
- FR 2932101
- EP 2441516 A

**Littérature non-brevet citée dans la description**

- **D.R. LIDE.** CRC Handbook of Chemistry and Physics. 2000
- *The Journal of American Society,* 1938, vol. 60, 309
- **C.DALMAZZONE.** Génération mécanique des émulsions. *Oil & Gas Science Technology,* 2000, vol. 55 (3), 281-305